# FASCICULE DE BREVET EUROPEEN

(11) **EP 1 980 739 B1**
(45) Date de publication et mention de la délivrance du brevet: **21.08.2019**
(21) Numéro de dépôt: 08154295.3
(22) Date de dépôt: 10.04.2008
(51) Int. Cl.: F02K 1/74, F02K 1/56

(54) **Turboréacteur à double flux comportant un inverseur de poussée**
Mantelstromtriebwerk mit Schubumkehrer
Bypass jet engine comprising a thrust reverser

(30) Priorité: 13.04.2007 FR 0754465
(43) Date de publication de la demande: 15.10.2008
(73) Titulaire: Safran Aircraft Engines, 75015 Paris (FR)
(72) Inventeur: Emprin, Yves, 77000 Melun (FR); Fert, Jérémy, 75012 Paris (FR); Wesolowski, Jean-Pierre, 77210 Avon (FR)
(74) Mandataire: Intès, Didier Gérard André

(56) Documents cités:
- DE-C1- 4 433 759
- GB-A- 1 199 001
- US-A- 3 019 600
- US-A- 3 068 646
- US-A- 4 228 651

## Description

La présente invention concerne un turboréacteur à double flux avec un flux primaire, un flux secondaire, et comprenant un inverseur de poussée.

Habituellement, en position d'inversion de poussée, un inverseur de poussée obstrue au moins partiellement le flux d'éjection des gaz vers l'arrière, et réoriente celui-ci vers les côtés ou mieux vers l'avant du turboréacteur, générant de ce fait une contre-poussée qui vient s'ajouter au freinage des roues de l'avion. Au minimum, l'inverseur de poussée réduit la vitesse vers l'arrière du turboréacteur du flux d'éjection des gaz.

Les moyens mis en oeuvre pour réaliser cette réorientation ou du moins cette réduction de la vitesse vers l'arrière du flux sortant varient suivant le type d'inverseur. En règle générale, l'architecture d'un inverseur comprend des moyens de déviation, déplaçables entre d'une part, une position d'inversion de poussée ou position ouverte dans laquelle l'inverseur fonctionne et réduit la vitesse vers l'arrière du flux sortant, et d'autre part, une position normale ou position fermée ou escamotée dans laquelle le turboréacteur assure normalement sa fonction de propulsion.

Différents types d'inverseurs sont connus.

Dans les inverseurs à portes, des portes viennent obstruer le flux secondaire, le dévient vers l'avant de l'avion.

Dans l'inverseur de type cascade, des portes coulissantes viennent ouvrir la nacelle tout en tirant des volets qui obstruent le flux secondaire.

Selon un autre mode de réalisation connu, l'inverseur de poussée est formé par une partie arrière de la nacelle constituée en une partie mobile, qui peut se déplacer vers l'arrière pour se mettre en position d'inversion de poussée et dévier le flux secondaire, ou revenir vers l'avant pour revenir en tant que partie intégrée à la nacelle, permettant alors le fonctionnement normal du turboréacteur (voir ainsi le brevet EP 1 416 147).

D'autres agencements d'inverseurs de poussée sont divulgués par ailleurs par les documents GB 1 199 001A et US4,228,651A.

Ces différentes dispositions font appel à des structures mécaniques relativement complexes portées généralement par la nacelle du turboréacteur. Cette complexité fait que l'inverseur a un poids important et globalement un coût disproportionné par rapport au temps de son utilisation par rapport à la durée du vol (quelques secondes). De plus, comme la nacelle sur le turboréacteur est la partie de plus grand diamètre, l'inverseur a nécessairement des dimensions importantes, et apparaît par conséquent comme un des éléments prépondérant et très pénalisant dans le bilan des masses de l'ensemble propulsif. Son coût de fabrication et son coût d'utilisation (lié à son poids) sont donc élevés. Sa présence en outre empêche de réduire la taille de la nacelle ; l'inverseur empêche d'adopter un profil de nacelle plus aérodynamique, c'est-à-dire de réduire le diamètre maximal de celle-ci ce qui permettrait d'améliorer les performances du turboréacteur.

Le but de l'invention est de remédier aux inconvénients précités en définissant un turboréacteur à double flux définissant un axe et des directions avant et arrière, comprenant une nacelle, un flux primaire qui traverse un compresseur, une chambre de combustion en aval de laquelle sont éjectés les gaz de flux primaire via une turbine dans un carénage de tuyère primaire ; un flux secondaire ; et un inverseur de poussée, cet inverseur ayant une structure compacte, relativement simple et un poids limité.

Cet objectif est atteint grâce au fait que l'inverseur de poussée du turboréacteur comporte des moyens de déviation aptes à dévier tout ou partie des gaz de flux primaire au voisinage ou en aval d'une extrémité arrière (11) de la nacelle en position d'inversion de poussée ; de telle sorte qu'en position d'inversion de poussée, les gaz de flux primaire déviés rencontrant le flux secondaire réduisent la vitesse d'éjection vers l'arrière de ce dernier, et génèrent ainsi un effet de poussée inverse, le flux secondaire s'échappant en arrière de la nacelle ; et au fait qu'en position d'inversion de poussée les moyens de déviation s'inscrivent radialement sensiblement à l'intérieur de la section du carénage de tuyère primaire au niveau d'une extrémité arrière de la nacelle.

L'originalité de l'invention peut être mieux comprise en comparant le turboréacteur selon l'invention à d'autres turboréacteurs double flux équipés d'inverseurs de poussée.

Le plus souvent, pour réaliser l'inversion de poussée, on agit sur le flux secondaire créé par la rotation de la soufflante, qui est le flux le plus important et celui qui génère le plus de poussée. Il est possible également d'agir sur l'ensemble des flux rejetés par le turboréacteur.

Toutefois, le principe spécifique retenu dans l'inverseur de poussée d'un turboréacteur selon l'invention diffère des principes qui viennent d'être énoncés, en ce qu'il consiste à dévier tout ou partie des gaz de flux primaire par des moyens de déviation, et à les rediriger à l'encontre du flux secondaire, pour briser celui-ci et de ce fait réduire la vitesse vers l'arrière des flux sortants. Ainsi avantageusement, tout en agissant mécaniquement seulement sur les gaz de flux primaire, on intervient sur l'ensemble des flux sortants du turboréacteur.

La partie déviée des gaz de flux primaire a naturellement une vitesse vers l'arrière réduite du fait de la déviation ; le flux secondaire a pour sa part une vitesse réduite dans la direction arrière, du fait de la rencontre avec les gaz de flux primaire déviés.

Naturellement, la conformation la plus avantageuse est celle qui conduit à ce que le flux sortant soit dirigé perpendiculairement à l'axe du turboréacteur voire relativement vers l'avant du turboréacteur.

L'inverseur de poussée utilise une partie des gaz de flux primaire et est situé habituellement dans la partie arrière du turboréacteur. En outre, comme il agit par déviation des gaz de flux primaire, il doit être placé sur le trajet de ceux-ci ; cela permet avantageusement qu'il soit placé relativement près de l'axe du turboréacteur, c'est-a-dire notamment bien plus près de cet axe que s'il devait interagir avec le flux secondaire. Il peut donc avoir un diamètre relativement réduit. Avantageusement, le diamètre de l'inverseur selon l'invention est même réduit de telle sorte qu'il s'inscrive sensiblement dans la section du carénage de tuyère primaire au niveau de l'extrémité arrière de la nacelle. Il en résulte que les parties mecaniques de l'inverseur n'interagissent pas, ou du moins pas de manière importante, avec le flux secondaire sortant de la nacelle. Ce sont les gaz de flux primaire déviés qui agissent sur le flux secondaire, et non pas les moyens mécaniques de l'inverseur comme des volets ou autre.

Ainsi, grâce à son (relativement) faible diamètre, l'inverseur reste compact et relativement léger.

Au contraire, dans un inverseur de poussée classique les éléments constitutifs de celui-ci sont disposés en général au moins en partie dans la nacelle. Dans la plupart des cas, ce sont ces éléments qui déterminent l'encombrement de la nacelle, et donc le maître couple global du turboréacteur.

Ainsi a contrario, le fait de placer les élements constitutifs de l'inverseur de poussée dans le corps-même du turboréacteur permet de ménager des marges de manoeuvre supplémentaires sur l'encombrement de l'ensemble propulsif, et donc de réaliser des gains supplémentaires.

Plus généralement, les caracteristiques précitées permettent d'adopter diverses conformations qui permettent d'atteindre les objectifs visés d'allègement et de simplification de la structure du turboréacteur, grâce à des structures sensiblement plus compactes que celles des inverseurs de poussée connus.

En particulier, grâce au positionnement des moyens de déviation de l'inverseur de poussée vers l'arrière du turboréacteur, lors de l'inversion de poussée le flux secondaire dévié s'échappe en arrière de la nacelle. On peut ainsi utiliser une nacelle dont avantageusement la périphérie extérieure est constituée de pièces fixes (du moins pendant la mise en oeuvre de la fonction d'inversion de poussée) et ne comporte pas de pièces mobiles.

Avantageusement, lesdits moyens de déviation comportent au moins une structure mobile, apte à se déplacer d'une position normale ou escamotée à une position d'inversion de poussée dans laquelle la structure mobile dévie tout ou partie des gaz de flux primaire.

Lesdits moyens de déviation comprennent également des moyens d'actionnement, pour déplacer la structure mobile de la position normale à la position d'inversion de poussée et inversement. Les moyens d'actionnement peuvent comporter un ou plusieurs vérins, par exemple hydrauliques, à kérosène ou électriques.

Ces moyens d'actionnement comportent de préférence des moyens de protection contre les hautes températures. En effet, étant situés à l'arrière du moteur et au voisinage de la chambre de combustion, ils sont situes dans une zone dans laquelle les températures peuvent être élevées.

Le turboréacteur peut comporter en outre un corps central autour duquel s'écoule le flux primaire, ladite structure mobile étant rattachée audit corps central

Ce cône constitue une structure centrale sur laquelle peuvent être fixés les moyens de déviation du flux primaire, permettant dans une réalisation compacte de réaliser la fonction d'inverseur de poussée.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
La figure 1 est une vue en coupe axiale d'un turboréacteur double flux selon un premier mode de réalisation de l'invention ;
La figure 2 est une vue en coupe axiale de la partie arrière d'un turboréacteur double flux selon un autre mode de réalisation de l'invention ;
Les figures 3A à 3C sont des vues de détail en coupe axiale perspective de la partie arrière de deux turboréacteurs selon l'invention, qui sont des variantes du turboréacteur présenté par la figure 1 ; en 3A et 3B, un turboréacteur est représenté respectivement en position normale et en position d'inversion de poussée ; en 3C, un autre turboréacteur est représenté en position d'inversion de poussee.

Nous allons maintenant decrire de manière plus détaillée, en liaison avec les figures annexées, certains modes de réalisation de l'invention.

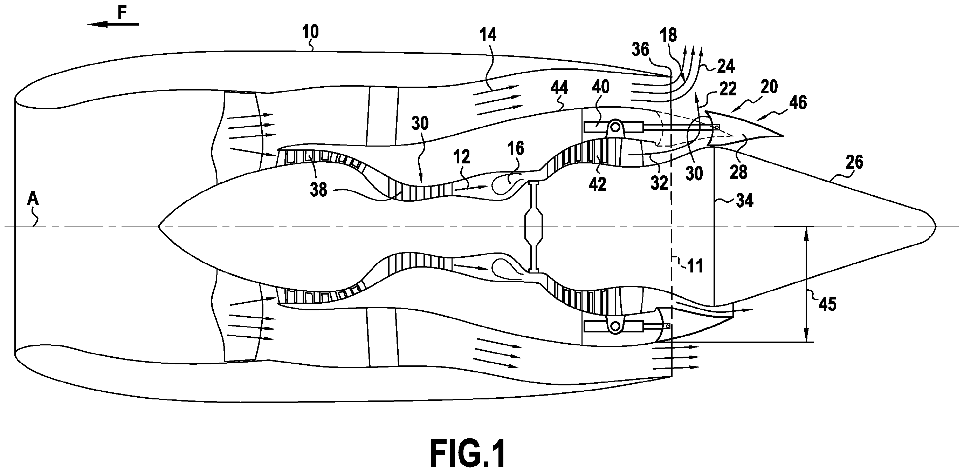

En faisant référence à la figure 1, un turboréacteur double flux selon l'invention va maintenant être décrit. Sur la partie supérieure de cette figure, l'inverseur de poussée est représenté en position d'inversion de poussée, et sur la partie inferieure de la figure, en position normale.

Le turboreacteur à double flux définit un axe A et des directions avant et arrière. Il comprend une nacelle 10, un flux primaire 12 qui traverse un compresseur 38 constitué par un compresseur basse pression suivi par un compresseur haute pression, une chambre de combustion 16, une turbine 42, avant d'être éjecté en arriere de celle-ci dans un flux primaire d'éjection 32 , un flux secondaire 14 Les flux primaire et secondaire sont séparés par un carénage 44 de tuyère primaire séparant les flux primaire et secondaire. De plus, le turboreacteur comporte un corps central 26 autour duquel s'écoule le flux primaire d'éjection 32 lorsque l'inverseur de poussée est en position escamotée et que le turboréacteur assure sa fonction normale de propulsion.

Ce corps central 26 présente une partie de plus fort diamètre (du moins pour sa partie située en arrière de la chambre de combustion) au niveau d'un maître-couple 34

Ces différents éléments de turboréacteur sont connus de l'homme du métier.

Le turboréacteur presenté comporte en outre un inverseur de poussée 18 comportant des moyens de déviation 20. Ces moyens de déviation 20 comprennent un ensemble de vérins 40, disposés régulièrement sur la périphérie du carénage 44 de tuyère primaire, et une structure mobile 46 actionnée par les vérins

Dans le mode de réalisation représenté sur la figure 1, la structure mobile comprend la partie arrière du carénage 44 de tuyère primaire. En position escamotée, la structure mobile est en position avant, ou normale, c'est-à-dire que la tuyère primaire prend la forme habituelle d'une tuyère primaire dans un turboréacteur.

Lors du passage de la position normale à la position d'inversion de poussée, la structure mobile, et plus particulièrement la partie arrière 44 du carénage de tuyère primaire, se déplace : elle est poussée vers l'arrière du turboréacteur par les vérins 40

Comme on peut le voir sur partie supérieure de la figure 1 qui représente la position d'inversion de poussée, la structure mobile comprend en particulier un ensemble de volets 30 En position d'inversion de poussée, ces volets 30 prennent sensiblement la forme d'une couronne disposée autour du corps central, ou en d'autres termes, la structure mobile en position d'inversion de poussée prend la forme sensiblement d'une couronne disposée autour du corps central pour dévier tout ou partie des gaz de flux primaire.

Les volets 30, qui sont sensiblement radiaux, viennent alors intercepter les gaz de flux primaire pour les dévier, et les diriger à l'encontre du flux secondaire En outre, la structure mobile comprend une partie arrière du carénage de tuyère primaire située dans le prolongement en aval des volets 30.

La structure mobile peut comprendre en outre des moyens pour canaliser le flux primaire dévié, non représentés sur la figure 1, qui seront definis par la suite.

En position d'inversion de poussée, la structure mobile est donc déplacée vers l'arrière du turboréacteur. Elle est placee avantageusement au voisinage et sensiblement autour du maître-couple du corps central, qui est (au moins localement) une partie de plus grand diametre du corps central A cet endroit, la structure mobile dévie tout ou partie (suivant le mode de réalisation) des gaz de flux primaire dans une direction sensiblement radiale Les gaz de flux primaire déviés 22 rencontrent le flux secondaire 14 Du fait de la rencontre des deux flux, la vitesse d'ejection vers l'arrière du flux secondaire est reduite ce qui genere l'effet de poussée inverse

Naturellement dans d'autres modes de réalisation, dont certains sont présentés dans ce qui suit, la structure mobile peut être disposee non pas au niveau du maître-couple mais à un autre niveau du corps central.

L'avantage principal du mode de réalisation de la figure 1, est que le mouvement de la structure mobile pour passer en position d'inversion de poussée est une simple translation Une poussée axiale suivant l'axe du turboréacteur suffit pour faire passer la structure mobile en position d'inversion de poussée. Lorsqu'à l'inverse les pistons des vérins 40 sont rentrés, la structure mobile est ramenée vers l'avant du turboréacteur en position escamotée, et le carénage 44 reprend une forme fonctionnelle permettant le fonctionnement propulsif du turboréacteur.

L'ensemble des vérins 40 agissent de concert pour réaliser la translation de la structure mobile ; ainsi les moyens de déviation de l'inverseur de poussée restent relativement simples, ont un poids limité, et sont d'un coût modéré

Suivant ce mode de réalisation, les volets 30 sont optimisés en fonction de l'espace disponible dans le carénage 44 de tuyère primaire ; ils peuvent ainsi s'avérer plus ou moins efficaces pour dévier les gaz de flux primaire et dévier de ce fait le flux secondaire. Néanmoins, pour augmenter si nécessaire l'efficacité de l'inverseur de poussée, on peut aussi adapter et optimiser la nacelle, de maniere à augmenter l'espace disponible pour les volets 30. Une telle modification peut permettre en plus de réduire avantageusement le maître couple de la nacelle.

Cela étant, l'effet de poussée inverse naît dès qu'il y a réduction de la composante suivant l'axe du turboréacteur des flux sortants émis par le turboréacteur. De préférence, le flux secondaire devié est dirigé avec un angle supérieur à 60° par rapport à la direction arrière, ou mieux encore avec un angle supérieur à 90° par rapport à la direction arrière.

Un autre paramètre est la longueur relative de la nacelle par rapport au carénage 44 de tuyère primaire. De préférence, la nacelle doit être sensiblement plus courte dans la direction arrière que celui-ci, afin de permettre le passage pour le flux secondaire dévié 24.

Enfin, avantageusement dans un turboréacteur selon l'invention, l'inverseur de poussée est remarquablement compact En effet, la structure arrière mobile 46 du carénage 44, en position d'inversion de poussée, s'inscrit radialement sensiblement à l'intérieur de la section 45 (voir figure 1) du carénage 44 de tuyère primaire, cette section étant mesurée au niveau de l'extrémite arriere 11 de la nacelle 10. En fait, la plus grande partie du flux secondaire n'est pas directement, ou mécaniquement, déviée par la structure mobile, mais est déviée par le flux primaire projeté à son encontre par l'inverseur de poussée.

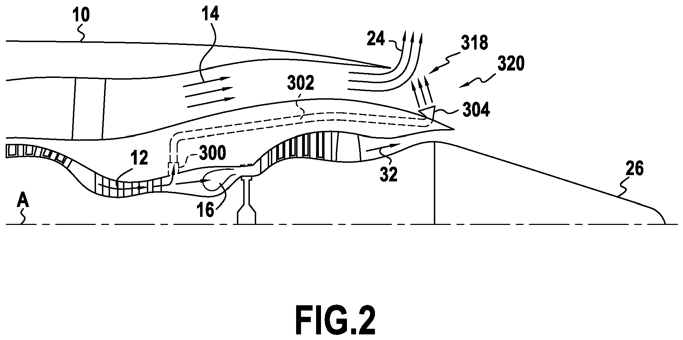

En se référant à la figure 2, un autre mode de réalisation de l'invention va maintenant être décrit.

On peut identifier sur cette figure les structures principales d'un turboréacteur décrites précédemment, comme la nacelle 10, les flux primaire 12 et secondaire 14, la chambre de combustion 16, et enfin le corps central 26 autour duquel s'écoule le flux primaire d'éjection 32.
Le turboréacteur comporte en outre un inverseur de poussée 318, comprenant des moyens de déviation 320. Ces moyens de déviation comportent un système de prélèvement 300 pour prélever tout ou partie des gaz de flux primaire et des injecteurs 304 pour injecter ceux-ci à l'encontre du flux secondaire. Le système de prélèvement 300, peut fonctionner par exemple par aspiration ; des canalisations 302 conduisant les gaz de flux primaire déviés jusqu'aux injecteurs 304.

Le systeme de prélèvement sert à prélever une partie des gaz transitants à haute pression dans la veine de flux primaire du moteur, lors de l'utilisation de l'inverseur de poussée. Il peut être placé plus ou moins en amont - ou en aval - de la chambre de combustion en fonction des possibilités d'implantation et de la pression des gaz voulue ; en outre, les moyens de déviation peuvent si nécessaire comporter de plus un ou plusieurs volets mobiles pouvant être déployés dans la veine des gaz de flux primaire pour les dévier

Les gaz de flux primaire sont déviés sous une pression relativement forte, ce qui peut éventuellement permettre d'éviter ou de réduire le recours à des compresseurs. En outre, le point de prélèvement du flux primaire étant relativement à l'arrière du turboréacteur, la longueur de canalisation est réduite et l'inverseur de poussée reste relativement compact. Les gaz déviés sont conduits via un ensemble de canalisations 302. Ils sont alors réinjectés par des injecteurs 304 de manière à créer un flux primaire détourné allant à l'encontre du flux secondaire. Ainsi, le flux secondaire est dévié, sa vitesse axiale vers l'arrière est réduite et l'effet de poussée inverse est obtenu. De surcroît, dans la configuration présentée le flux secondaire dévié par le flux primaire réinjecté peut passer derrière la nacelle, évitant le besoin de parties mobiles dans celle-ci. Naturellement, ce type d'inverseur de poussée conduit à privilégier l'adoption de nacelles courtes, qui facilitent l'implantation de tels inverseurs

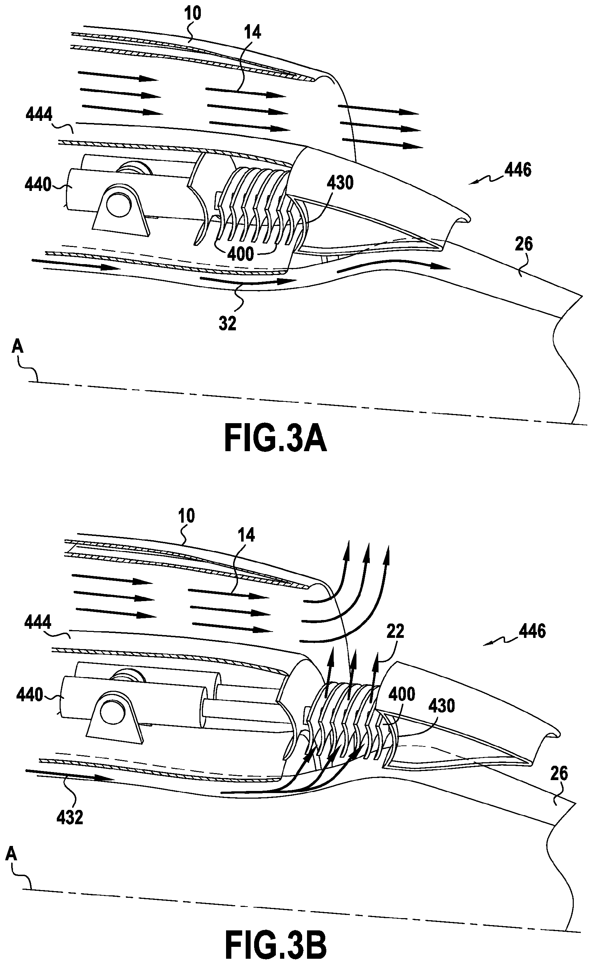

En faisant référence aux figures 3A à 3C, un autre mode de réalisation va maintenant être décrit. Le mode de réalisation présenté sur ces figures reprend la structure de turboréacteur décrite en figure 1 en lui apportant un perfectionnement afin de mieux canaliser les gaz de flux primaire déviés, et est applicable à tout turboréacteur selon l'invention. Ce perfectionnement consiste en des moyens pour canaliser le flux devié et le rendre plus laminaire. En effet, il est important de conserver un écoulement aussi laminaire que possible pour diminuer les pertes de puissance aéraulique et limiter la fatigue des structures mécaniques

Deux modes de réalisation sont présentés respectivement par les figures 3A et B, d'une part, et 3C d'autre part.

Sur les figures 3A et 3B, les moyens de déviation peuvent comporter en outre des ailettes 400. Ces ailettes s'étendent sensiblement parallèlement au volet 430 sur lequel vient buter le flux primaire à dévier. Elles permettent de rendre l'écoulement des gaz de flux primaire déviés 22 plus laminaire

En figure 3A, on voit la structure mobile en position normale, rangée à l'interieur du carénage 444 de tuyère primaire , elle n'a alors aucun impact sur les performances du moteur

En figure 3B, on voit la structure mobile en position d'inversion de poussée Le volet est alors placé sensiblement au droit du maître-couple du cône d'échappement ce qui lui permet avantageusement de se situer dans la continuité de la partie amont du corps central. Les gaz de flux primaire dévies traversent les ailettes, qui jouent alors pleinement leur rôle

La structure mobile est déplacée de la position normale ou escamotée à la position d'inversion de poussée, et vice-versa, par les vérins 440

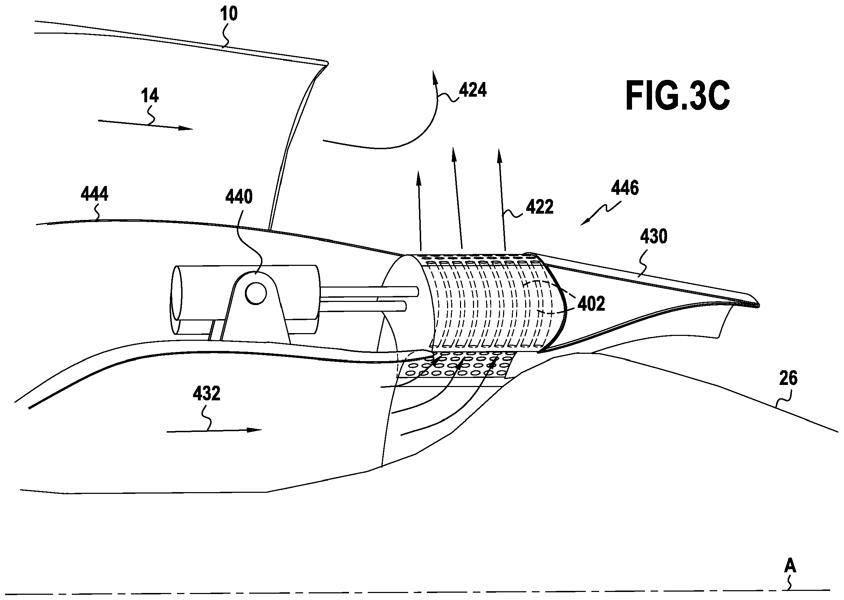

Sur la figure 3C, les moyens de déviation peuvent comporter en outre au moins une boîte perforée, comprenant une ou plusieurs plaques ou parois perforées - deux plaques dans l'exemple présenté - reconstituant des grilles reliées par de nombreuses conduites internes 402 qui véhiculent, canalisent et finalement rendent laminaire le flux dévié. Une telle boîte perforée est une alternative par rapport aux ailettes precédentes, les deux modes de realisation pouvant toutefois également être utilises en combinaison.

## Revendications

1. Turboréacteur à double flux définissant un axe et des directions avant et arrière, comprenant une nacelle (10), un flux primaire (12) qui traverse un compresseur (38), une chambre de combustion (16) en aval de laquelle sont éjectés les gaz de flux primaire via une turbine (42) dans un carénage (44,444) de tuyère primaire ; un flux secondaire (14) ; et un inverseur de poussée (18) ;
l'inverseur de poussée comportant des moyens de déviation (20) aptes à dévier tout ou partie des gaz de flux primaire au voisinage ou en aval d'une extrémité arrière (11) de la nacelle en position d'inversion de poussée ; de telle sorte qu'en position d'inversion de poussée, les gaz de flux primaire déviés (22) rencontrant le flux secondaire réduisent la vitesse d'éjection vers l'arrière de ce dernier, et génèrent ainsi un effet de poussée inverse ;
le turboréacteur **se caractérisant en ce qu'**il est configuré de telle sorte que :
pendant l'inversion de poussée, le flux secondaire s'échappe en arrière de la nacelle ; et
en position d'inversion de poussée les moyens de déviation s'inscrivent radialement sensiblement à l'intérieur de la section (45) du carénage de tuyère primaire au niveau de l'extrémité arrière (11) de la nacelle (10) ;
une périphérie extérieure de la nacelle étant constituée de pièces qui demeurent fixes pendant l'inversion de poussée.

2. Turboréacteur selon la revendication 1, **caractérisé en ce que** la périphérie extérieure de la nacelle (10) est constituée de pièces fixes.

3. Turboréacteur selon la revendication 1 ou 2, **caractérisé en ce que** lesdits moyens de déviation (20) comportent au moins une structure mobile (46), apte à se déplacer d'une position normale à une position d'inversion de poussée dans laquelle elle dévie tout ou partie des gaz de flux primaire.

4. Turboréacteur selon la revendication 3, **caractérisé en ce qu'**une poussée axiale suivant l'axe du turboréacteur permet de faire passer la structure mobile en position d'inversion de poussée.

5. Turboréacteur selon la revendication 3 ou 4, **caractérisé en ce qu'**il comporte en outre un corps central (26) autour duquel s'écoule le flux primaire ; que ledit corps central présente une partie de plus fort diamètre ; et qu'en position d'inversion de poussée, la structure mobile (46) est positionnée sensiblement autour de cette partie de plus fort diamètre.

6. Turboréacteur selon la revendication 5, **caractérisé en ce que** la structure mobile (46) en position d'inversion de poussée prend la forme sensiblement d'une couronne disposée autour dudit corps central pour dévier tout ou partie des gaz de flux primaire.

7. Turboréacteur selon l'une quelconque des revendications 3 à 6, **caractérisé en ce que** le mouvement de la structure mobile est une translation.

8. Turboréacteur selon l'une quelconque des revendications 3 à 7, **caractérisé en ce que** la structure mobile (46, 446) comprend la partie arrière du carénage de tuyère primaire (44,444), qui se déplace lors du passage de la position normale à la position d'inversion de poussée.

9. Turboréacteur selon l'une quelconque des revendications 1 à 8, **caractérisé en ce que** les moyens de déviation comportent un système de prélèvement (300) pour prélever tout ou partie des gaz de flux primaire et des injecteurs (304) pour injecter ces gaz à l'encontre du flux secondaire.

10. Turboréacteur selon la revendication 9, **caractérisé en ce que** le système de prélèvement (300) est apte à prélever les gaz de flux primaire en amont de la chambre de combustion (16).

11. Turboréacteur selon la revendication 10, **caractérisé en ce que** le système de prélèvement (300) est apte à prélever les gaz de flux primaire en aval de la chambre de combustion (16).

12. Turboréacteur selon l'une quelconque des revendications 9 à 11, **caractérisé en ce que** le système de prélèvement (300) comporte un ou plusieurs volets mobiles pouvant être déployés dans la veine des gaz de flux primaire pour les dévier.

13. Turboréacteur selon l'une quelconque des revendications 1 à 12, **caractérisé en ce que** les moyens de déviation comportent des moyens de protection contre les hautes températures.

14. Turboréacteur selon l'une quelconque des revendications 1 à 13, **caractérisé en ce que** les moyens de déviation comportent en outre des ailettes (400).

15. Turboréacteur selon l'une quelconque des revendications 1 à 14, **caractérisé en ce que** les moyens de déviation comportent une ou plusieurs parois perforées.

16. Turboréacteur selon l'une quelconque des revendications 1 à 15, **caractérisé en ce que** les moyens de déviation comportent au moins une boîte perforée.

## Patentansprüche

1. Mantelstromtriebwerk, das eine Achse und eine vordere und eine hintere Richtung definiert, umfassend eine Gondel (10), eine Primärströmung (12), die einen Verdichter (38) durchläuft, eine Brennkammer (16), der nachgelagert die Primärströmungsgase über eine Turbine (42) in eine Primärdüsenverkleidung (44, 444) ausgestoßen werden, eine Sekundärströmung (14), und eine Schubumkehrvorrichtung (18),
wobei die Schubumkehrvorrichtung Ablenkmittel (20) umfasst, die in der Lage sind, alle oder einen Teil der Primärströmungsgase in der Nähe eines bzw. stromabwärts von einem hinteren Ende(s) (11) der Gondel in der Schubumkehrposition abzulenken, sodass in der Schubumkehrposition die abgelenkten Primärströmungsgase (22), die die Sekundärströmung treffen, die Ausstoßgeschwindigkeit nach hinten verringern und somit einen Schubumkehreffekt erzeugen,
wobei das Triebwerk **dadurch gekennzeichnet ist, dass** es so konfiguriert ist, dass:
bei der Schubumkehr die Sekundärströmung hinter der Gondel entweicht, und
in der Schubumkehrposition die Ablenkmittel sich radial im Wesentlichen innerhalb des Abschnitts (45) der Primärdüsenverkleidung am hinteren Ende (11) der Gondel (10) befinden,
wobei ein Außenumfang der Gondel aus Teilen besteht, die während der Schubumkehr fixiert bleiben.

2. Triebwerk nach Anspruch 1, **dadurch gekennzeichnet, dass** der Außenumfang der Gondel (10) aus festen Teilen besteht.

3. Triebwerk nach Anspruch 1 oder 2, **dadurch gekennzeichnet, dass** die Ablenkmittel (20) mindestens eine bewegliche Struktur (46) aufweisen, die in der Lage ist, sich von einer Normalposition in eine Schubumkehrposition zu bewegen, in der sie alle oder einen Teil der Primärströmungsgase ablenkt.

4. Triebwerk nach Anspruch 3, **dadurch gekennzeichnet, dass** ein Axialschub entlang der Achse des Triebwerks es ermöglicht, die bewegliche Struktur in die Schubumkehrposition zu bewegen.

5. Triebwerk nach Anspruch 3 oder 4, **dadurch gekennzeichnet, dass** es ferner einen zentralen Körper (26) umfasst, um den die Primärströmung fließt, dass der zentrale Körper einen Teil mit einem größeren Durchmesser aufweist, und dass in der Schubumkehrposition die bewegliche Struktur (46) im Wesentlichen um diesen Teil mit einem größeren Durchmesser angeordnet ist.

6. Triebwerk nach Anspruch 5, **dadurch gekennzeichnet, dass** die bewegliche Struktur (46) in der Schubumkehrposition im Wesentlichen die Form eines Rings annimmt, der um den zentralen Körper herum angeordnet ist, um alle oder einen Teil der Primärströmungsgase abzulenken.

7. Triebwerk nach einem der Ansprüche 3 bis 6, **dadurch gekennzeichnet, dass** die Bewegung der beweglichen Struktur eine Translation ist.

8. Triebwerk nach einem der Ansprüche 3 bis 7, **dadurch gekennzeichnet, dass** die bewegliche Struktur (46, 446) den hinteren Teil der Primärdüsenverkleidung (44, 444) umfasst, der sich beim Übergang von der Normalposition in die Schubumkehrposition bewegt.

9. Triebwerk nach einem der Ansprüche 1 bis 8, **dadurch gekennzeichnet, dass** die Ablenkmittel ein Probenahmesystem (300) zur Entnahme aller oder eines Teils der Primärströmungsgase und Injektoren (304) zur Injektion dieser Gase entgegen der Sekundärströmung umfassen.

10. Triebwerk nach Anspruch 9, **dadurch gekennzeichnet, dass** das Probenahmesystem (300) in der Lage ist, die Primärströmungsgase vor der Brennkammer (16) zu entnehmen.

11. Triebwerk nach Anspruch 10, **dadurch gekennzeichnet, dass** das Probenahmesystem (300) in der Lage ist, die Primärströmungsgase nach der Brennkammer (16) zu entnehmen.

12. Triebwerk nach einem der Ansprüche 9 bis 11, **dadurch gekennzeichnet, dass** das Probenahmesystem (300) eine oder mehrere bewegliche Klappen aufweist, die in den Strom der Primärströmungsgase eingesetzt werden können, um sie abzulenken.

13. Triebwerk nach einem der Ansprüche 1 bis 12, **dadurch gekennzeichnet, dass** die Umlenkmittel Mittel zum Schutz gegen hohe Temperaturen umfassen.

14. Triebwerk nach einem der Ansprüche 1 bis 13, **dadurch gekennzeichnet, dass** die Umlenkmittel ferner Rippen (400) umfassen.

15. Triebwerk nach einem der Ansprüche 1 bis 14, **dadurch gekennzeichnet, dass** die Umlenkmittel eine oder mehrere perforierte Wände umfassen.

16. Triebwerk nach einem der Ansprüche 1 bis 15, **dadurch gekennzeichnet, dass** die Umlenkmittel mindestens einen perforierten Kasten umfassen.

## Claims

1. A by-pass turbojet defining an axis and forward and aft directions, comprising a nacelle (10), a primary stream (12) passing through a compressor (38), a combustion chamber (16) downstream from which the primary stream gas is ejected via a turbine (42) in a primary nozzle cowl (44,144); a secondary stream (14); and a thrust reverser (18);
wherein the thrust reverser comprises deflector means (20) suitable, in a thrust-reversal position, for deflecting all or part of the primary stream gas in the vicinity of or downstream from a aft end (11) of the nacelle; such that in the thrust-reversal position, the deflected primary stream gas (22) encounters the secondary stream, thereby reducing the speed of ejection thereof in the aft direction, and thus generating a reverse-thrust effect;
the by-pass turbojet being **characterized by** being configured so that:
during thrust-reversal, the secondary stream escapes from the aft of the nacelle; and
in the thrust-reversal position, the deflector means are inscribed radially substantially inside the section (45) of the primary nozzle cowl at the aft end (11) of the nacelle (10);
an outer periphery of the nacelle being constituted of parts which remain stationary during thrust-reversal.

2. A turbojet according to claim 1, **characterized in that** the outer periphery of the nacelle (10) is constituted by parts that are stationary.

3. A turbojet according to claim 1 or 2, **characterized in that** said deflector means (20) comprise at least one moving structure (46) suitable for moving from a normal position to a thrust-reversal position in which it deflects all or part of the primary stream gas.

4. A turbojet according to claim 3, **characterized in that** axial thrust along the axis of the turbojet serves to cause the moving structure to pass into the thrust-reversal position.

5. A turbojet according to claim 3 or 4, **characterized by** further comprising a central body (26) about which the primary stream flows; wherein said central body presents a portion of greatest diameter; and wherein in the thrust-reversal position, the moving structure (46) is positioned substantially around said greatest-diameter portion.

6. A turbojet according to claim 5, **characterized in that** the moving structure (46) in the thrust-reversal position is substantially in the form of a ring disposed around said central body to deflect all or part of the primary stream gas.

7. A turbojet according to any one of claims 3 to 6, **characterized in that** the movement of the moving structure is movement in translation.

8. A turbojet according to any one of claims 3 to 7, **characterized in that** the moving structure (46,446) comprises the aft portion of the primary nozzle cowl (44,444) that moves on passing from the normal position to the thrust-reversal position.

9. A turbojet according to any one of claims 1 to 8, **characterized in that** the deflector means comprise a bleeder system (300) for bleeding all or part of the primary stream gas and injectors (304) for injecting the bled gas against the secondary stream.

10. A turbojet according to claim 9, **characterized in that** the bleeder system (300) is suitable for bleeding the primary stream gas upstream from the combustion chamber (16).

11. A turbojet according to claim 10, **characterized in that** the bleeder system (300) is suitable for bleeding the primary stream gas downstream from the combustion chamber (16).

12. A turbojet according to any one of claims 9 to 11, **characterized in that** the feeder system (300) includes one or more moving flaps suitable for being deployed in the primary stream gas flow in order to deflect the gas.

13. A turbojet according to any one of claims 1 to 12, **characterized in that** the deflector means include means for providing protection against high temperatures.

14. A turbojet according to any one of claims 1 to 13, **characterized in that** the deflector means further include fins (400).

15. A turbojet according to any one of claims 1 to 14, **characterized in that** the deflector means comprise one or more perforated walls.

16. A turbojet according to any one of claims 1 to 15, **characterized in that** the deflector means comprise a perforated box.
